# EUROPEAN PATENT SPECIFICATION

(11) **EP 4 015 189 B1**
(45) Date of publication and mention of the grant of the patent: **26.07.2023**
(21) Application number: 20216221.0
(22) Date of filing: 21.12.2020
(51) Int. Cl.: B29C 48/30, B29C 48/695

(54) **A STACK DIE FOR EXTRUSION MOULDING COMPRISING IMPROVED DIE ELEMENTS, METHOD OF MANUFACTURING THE STACK DIE AND USE THEREOF TO PROVIDE AN EXTRUDED ARTICLE**
STAPELMATRIZE FÜR STRANGPRESSEN MIT VERBESSERTEN MATRIZENELEMENTEN, VERFAHREN ZUR HERSTELLUNG DER STAPELMATRIZE UND VERWENDUNG DAVON ZUR HERSTELLUNG EINES EXTRUDIERTEN ARTIKELS
MATRICE EMPILÉE DE MOULAGE PAR EXTRUSION COMPRENANT DES ÉLÉMENTS DE MATRICE AMÉLIORÉS, PROCÉDÉ DE FABRICATION DE MATRICE EMPILÉE ET SON UTILISATION POUR LA FOURNITURE D'UN ARTICLE EXTRUDÉ

(43) Date of publication of application: 22.06.2022
(73) Proprietor: VKR Holding A/S, 2970 Hørsholm (DK)
(72) Inventor: BUSTOFT, Erik, 2970 Hørholm (DK)
(74) Representative: AWA Denmark A/S

(56) References cited:
- US-A- 5 334 458
- US-A- 5 643 618
- US-A1- 2005 048 180

## Description

### Technical Field

The present invention relates to a stack die for use in extrusion moulding, a method of manufacturing a stack die, and use of the stack die for extrusion moulding of an article having a desired shape.

### Background Art

Sealing elements such as rubber gaskets can be manufactured by extrusion moulding using a traditional die. The die has a cut-out of a specific geometry and a polymer is extruded through the cut-out. In this way the extrudate is shaped into the shape of the cut-out. In this way gaskets with all kinds of different configurations and shapes can be manufactured just by changing the shape of the die. The manufacturing process of these kind of gaskets does not constitute any problems when the gasket has a simple design and has even or approximately the same wall thickness.

An improved manufacturing process can be achieved by using a stack die, which is a die composed by several dies. The benefit is better quality products due to more uniform cooling and shrinkage which gives straighter products. Less material is spent using this technique and less unnecessary areas of materials have to be removed after extrusion, thus the cost of manufacture is lower. Due to less unnecessary material the cooling rate is higher due to less hot material. For this reason, production rate can be increased.

The drawbacks of this method are that the extrusion moulded articles are significantly affected by non-uniform die swell especially in corners and thin areas e.g. a gasket with square corners and/or thin vanes (lips).

The geometry of the extruded article is highly dependent on the shape of the die, but also the balance of flow inside the die. In order to achieve the right shape of the extrusion moulded article it may be required to experiment with the geometry of the different individual dies to avoid either swell or even shrinkage. When the geometry is changed in a traditional stack die configuration it might be necessary to prepare several full sets of dies, each comprising five to seven dies, before the desired shaped of the extrusion moulded article is achieved. A stack die typically comprises five different plates/elements, which alters the flow of moulded extrudate, e.g. polymer, through the stack die to provide the desired geometry. Configuring a new set of dies may be an iterative process of modifying and testing and due to the number of dies this can be very time consuming.

When the dies have been adjusted/modified to obtain the desired shape, it is important to remove the heat from the extruded article fast, in order for it to maintain its geometry. This can be done using a cooling medium such as a liquid or gas. If the extruded article has thin vanes or walls, it may be necessary to stabilize the thin areas until it has cooled sufficiently to maintain its geometry.

WO2012/139253 A1 discloses a stack die and a method for extrusion moulding an article using the die. The die comprises a pool die plate, an orifice plate and a profile plate. The pool die plate receives an extrudate from an extruder which enters through an orifice to the other side of the pool die plate where it flows into aflow groove and a branch flow groove into a flow pool. From the flow pool the extrudate flows through a plurality of orifices extending through the orifice die plate into an orifice die plate flow pool on the opposite side. The extrudate then flows from this flow pool through a flow channel in the profile die plate, having the intended geometry/profile. The orifices may be adjusted in size by e.g. grinding to adjust the flow. Also, the flow groove and the branch flow groove may comprise a choke portion. After exiting the profile die plate the article enters a sizer, which is a sized channel in which the article may pass, in which the shape of the article is maintained using a vacuum.

US patent No. 5,183,522 discloses an apparatus for manufacturing a weather strip. After extrusion the weather strip is stabilized using a core member and fixed and moveable forming rolls.

US patent application US 5,643,618 A discloses a die with a plurality of stacked plates. There is however still a need for improving the extrusion moulding process, especially of objects which have thin wall thickness, and to provide an efficient way of maintaining the shape of the thin walls during cooling of extrusion moulded object. There is also a need for a stack die with a simplified construction, which can allow for faster manufacture, thus entailing a reduction of manufacturing cost.

### Summary of Invention

It is a first object of the invention to provide an improved stack die, which can be easily adjusted and modified to produce an excellent extrusion moulded article of a desired shape. It is a further object of the present invention to provide means for stabilizing the extruded article after extrusion that is incorporated in the stack die and that does not negatively affect the flow of extrudate in the stack die. It is yet a further object of the present invention to provide a simplified stack die, which can be manufactured and handled more easily, e.g. during adjustment and/or cleaning.

Thus, according to a first aspect of the invention, at least one of these objects is achieved with a stack die for extrusion moulding an article of a desired shape, comprising
a first die element configured to be mounted on an extruder, a second die element configured to be mounted on the first die element and third die element configured to be mounted on the second die element,
the first die element comprises a flow channel,
the second die element comprises a plurality of perforations fluidly connecting the first die element and third die element,
the third die element comprises a cut-out, which has a shape similar to the desired shape of the article and so that it produces an article with the desired shape during an extrusion moulding method,
further comprising a protruding element located on a downstream side of the second die element and protruding into the cut-out of the third die element in an assembled condition

With this simple construction, handling of the stack die is made easier, e.g. upon adjusting the number and/or sizes of the perforations in the second die element or cleaning of all stack die elements.

The flow channel is to be interpreted as comprising an opening or large through hole in the first die element.

The cut-out is a through hole in the third die element which has the shape corresponding to the intended outer shape of the article.

The term article is, in this context, used to describe the extrusion moulded product, which is manufactured by the stack die.

The word shape is used to describe the geometry of the article. The shape corresponds to the cross-section of the extrusion moulded product, i.e. the shape seen along the flow direction. By having a cut-out in the third die element fluidly connected by a second die element with a plurality of perforations, it is ensured that the flow of extrudate, which may be a polymer, is controlled. Extrudate refers to the moulded liquid that is extruded through the stack die to produce the article. The extrudate is preferably a polymer, but may have different compositions depending on required properties of the article, i.e. strength, flexibility, colour etc.

In a preferred embodiment, the flow channel is larger than the shape of the article. Thus, the pressure of the extrudate is applied more evenly on the second die element upstream side, and the flow of the extrudate through the perforations is more easily controlled by changing their size or number. Because of the increased flow control, the extrudate is allowed to distribute evenly into corners and thin areas. Thus, the large flow channel in the first die element and the plurality of perforations in the second die element ensure that the cut-out in the third die element is evenly filled with extrudate during the extrusion moulding method. This provides the advantage of reducing deformations in the extruded article.

As mentioned above, the perforations in all the embodiments contemplated herein may have different size. It may e.g. be preferred to have perforations of a larger size where a large volume of extrudate is required, whereas it may be preferred to have smaller perforations in areas of the geometry where less volume of extrudate is required, such as thin walls and vanes.

The distribution of perforations may be uniform or it may have more perforations in specific areas. The perforations are through holes which may for instance be drilled.

The second die element may therefore additionally or alternatively have a larger number of perforations in areas of the shape where a large volume of extrudate is required, and fewer perforations where less extrudate is required.

In a currently preferred embodiment the perforations in the second die element are arranged in a pattern which is similar to the desired shape of the extruded article, so that the perforations evenly distribute the extrudate in the cut-out during an extrusion moulding method.

When the perforations are distributed and arranged in sized as described, the flow of extrudate through the cut-out may be even and the extrusion moulded article is more likely to obtain the desired shape. Additionally, the perforations may be larger or smaller in some areas to compensate for shrinkage or swelling of the extruded article upon cooling.

Since the second die element comprises perforations and not a cut-out, the extrudate flow is limited to move only in the intended flow direction until it reaches the third die element. How the cut-out of the third die element is filled with extrudate is therefore easily controlled, compared to the prior art stack dies comprising additional dies with cut-outs, which can alter the flow in several directions and lead to non-uniform filling of the last die and therefore increased risk of malformation of the extruded article.

The second die according to the invention therefore provides a similar or better result, compared to that obtained by a conventional plurality of intermediate dies.

Furthermore, by having perforations in the second die in the place of a cut-out, it is easier to alter the extrudate flow. During extrusion moulding it can be seen from the article in which area the flow should be altered, which is simply done by closing a perforation, changing the size of it, or by adding additional perforations.

In addition, with the perforations being arranged in a pattern similar to the desired shape of the extruded article the specific area that should be altered is easier to identify. When the flow channel in the first die element has an opening larger than the cut-out in the third die element, this flow channel will advantageously never have to be altered in size.

According to the invention, the second die element comprises a protruding element located on a downstream side of the second die element and protruding into the cut-out of the third die element in an assembled condition.

When the stack die is mounted on an extruder, the upstream side the stack die is the side closest to the extruder e.g. in a direction against the flow of extrude, whereas downstream is in the direction of the flow of extrude, i.e. nearest the mouth of the stack die.

The protruding element occupies an area of the third die element cut-out in the mounted condition. By the protruding element not contacting the internal edge of the cut-out, the protruding element enables the extruder to produce articles with hollow geometry.

If, on the other hand, the protruding element is in contact with the internal edge of the cut-out at one or more points, the extruded article will be produced with one or several recess(es). A hole or recess in the extruded article can be easily added to the geometry by simply modifying the second die element in this way. The flow is as a consequence automatically adapted to the modified geometry.

In a preferred embodiment the protruding element has a length which is least equal to the thickness of the third die element. By length is meant the distance it protrudes from the surface of the second die element.

The protruding element may also have a length which is longer than the thickness of the third die element.

The first, second and third die elements all comprise aligned through holes, which can be used to assemble the stack die. Fastening means, such as bolts or screws can be inserted through the through holes to maintain the assembled stack die. The fastening means may similarly be used to mount the stack die onto the extruder.

In another currently preferred embodiment, the protruding element in the second die element extends through the cut-out of the third die element, so that when the stack die is assembled a part of the protruding element forms a stabilizing shelf beyond the downstream side of the third die element in the direction of the extrudate flow. An extruded article leaving the stack die is in this way allowed to obtain increased cooling time while being supported, before it is transported and cooled further. In this way the protruding element can support thin areas in the geometry and thus preventing them from losing their desired shape. The protruding element is especially preferred when the article is produced with a hollow geometry. The protruding element will guide the extruded article while it leaves the stack die mouth and the stabilizing shelf will permit an initial degree of cooling while the article travels away from the stack die mould, thus increasing the ease of an article with a geometry shaped according to the cut-out in the third die element being obtained.

The extruded element is in this way supported by the protruding element which is located within the geometry of the extruded article. The extruded article is therefore supported without being in contact with external stabilizing elements such as rolls, and it is therefore easy to extrude and stabilize an article which has an outer surface with an irregular shape, which was previously hard to stabilize.

In one embodiment, the protruding element extends 0.1 to 10 mm beyond the downstream side of third element in a mounted condition.

In another embodiment, the protruding element extends 0.5 mm to 5 mm beyond the downstream side of third element in a mounted condition.

In another embodiment, the protruding element extends 1 mm to 3 mm beyond the downstream side of third element in a mounted condition.

In a preferred embodiment, the protruding element extends 2 mm beyond the downstream side of third element in a mounted condition.

The length of the protruding element may differ depending on the thickness of the extruded article and therefore on the cooling time required. For thin areas of the article, such as vanes, a protruding element which extends between 0.1 mm and1 mm beyond the third die element face may be sufficient to sufficiently cool the article.

In another preferred embodiment, the stack die of the invention comprises a second stack die element configured to be mounted on a second extruder. Such a second die element also comprises a second flow channel fluidly connecting the second extruder and a second set of perforations in the downstream side of the second die element when extrusion moulding.

Such an arrangement is useful for co-extrusion of two different extrudates. At least two different extrudates may be extruded at two different flow rates depending on the number and the size of perforations provided in the second die element, the proportion of the extruded article to be formed by both the first and the second extrudates, the respective physical and chemical properties of the two extrudates etc.

In another preferred embodiment, the stack die of the invention comprises a second die element comprising two die elements: A primary second die element comprising at least part of the second flow channel and a secondary second die element, comprising the second set of perforations fluidly connecting the flow channel with the downstream side of the secondary second die element when extrusion moulding. By providing a second die element as two separate elements, the second flow channel and the second set of perforations may be located on separate die elements. This facilitates the adjustment of the dimensions of said channel and the dimensions and number of perforations in the second die element.

In another embodiment, the second flow channel is formed by cavities in both the primary second die element and the secondary second die element. Such an arrangement allows for more convenient access to the flow channel in the case of need for e.g. cleaning.

In yet another embodiment, the stack die of the invention comprises a fourth die element, in the form of a sieve plate, and mounted on the second die element, comprising separating walls in the cut-out preventing the two extrudates from mixing while extrusion moulding.

The inclusion of a fourth die element mounted on the second die element when extruding, and thus between the second die element and the third die element, provides additional length along which the extrudate can set and form the desired shape before exiting the stack die mouth and cooling on the stabilizing shelf and beyond. Thus, the thickness of the fourth die element may be varied to improve the shape of the extruded article.

Separating walls prevent the two extrudates from mixing too early, thus prioritizing an initial setting of each respective extrudate into the intended shape before progressing towards the cut out in the third die element.

As is with the first, second and third die elements, first and secondary second die elements and fourth die element all comprise aligned through-holes, which can be used to assemble the stack die.

Also as with the first, second and third die elements, the protruding element in the second die element extends through the cut-out of the third and fourth die elements, so that when the stack die is assembled a part of the protruding element forms a stabilizing shelf beyond the downstream side of the third die element in the direction of the extrudate flow.

In a second aspect of the invention, a method of manufacturing such a stack die is devised.

By the stack die consisting of a simplified construction, manufacturing of the stack die is simplified. Consequently, manufacture is accelerated and may thus be cheaper than in the case of prior art disclosures.

The third die element together with the protrusion element defines the shape of the extrusion moulded article. By modifying the shape of the cut-out of the third die element, or by providing a thicker second, third or fourth die elements, or by varying the dimensions and shape of the protrusion element, the dimensions and shape of the extrusion moulded article can be modified. If a deformation in a specific area of the article is due to a flow of extrudate that is too small, additional perforations may be made in the corresponding area in the second die element. Alternatively, or additionally, the size of perforations in the corresponding area may be increased to allow an increased flow to pass the second die element. If a deformation occurs in the extruded article and is due to a too high flow of extrudate, perforations present in a specific area may be obstructed by closing means. The closing means may be e.g. pins or nails. The pin(s) or nail(s) preferably has/have a thickness similar to, or slightly larger than the perforations so it/they can be inserted through the perforation(s) by applying a slight force. Thus, it is advantageous if the pins or nails are made of a material which is softer than the material of the second die element. The nails or pins may thereby adapt in size when applied with force to a perforation. Alternatively, the pins or nails have a thickness slightly smaller than the perforations. In this manner, the pins or nails may simply restrict the flow through the second die element, without blocking the flow entirely.

With these options, the user may easily adjust the flow rate of the extrudate through the second die element locally. By adjusting the extrudate flow locally, the final shape of the article may advantageously be controlled. In addition, once decided upon, the number and size of the perforations will belong to the constant parameters of the stack die extrusion mould, thus making reproducibility of the extruded article's shape more easy.

In addition, and because the flow of extrudate can easily be adjusted as described above, the method of manufacturing a stack die which produces an article with a desired shape is much faster and cheaper.

With the simplified stack die construction of the present invention, the perforations in the second die element may be more easily adjustable in comparison to the arrangements disclosed in the prior art and therefore, the extrudate flow rate may also be more easily adjustable.

In a third aspect, use of the stack die for extrusion moulding an article having a desired shape as described herein above is provided.

Use of the stack die enables manufacture of very detailed articles with very thin wall thickness which so far has been very hard to manufacture. Because the perforations are located within the fluid column area, the flow of extrudate is controlled and evenly fill the third die element. Use of the stack die leads to an improved extrusion moulding process of shapes and forms which otherwise would be difficult to manufacture. Therefore, with the flow of extrudate being easily adjusted and the stabilizing shelf supporting the extruded article as described previously herein above, the method of manufacturing an article with a desired shape is much faster and cheaper.

Other presently preferred embodiments and further advantages will be apparent from the subsequent detailed description and drawings.

### Brief Description of Drawings

In the following description embodiments of the invention will be described with reference to the schematic drawings, in which
Fig. 1 is a front view of a stack die according to an embodiment of the invention;
Fig. 2 is a perspective view of the downstream side of a second die element according to an embodiment of the invention;
Fig. 3 is perspective view of the upstream side of a second die element according to the same embodiment of the invention;
Fig. 4 is a perspective view of semi-assembled stack die according to an embodiment of the invention;
Fig. 5 is a perspective view of the first die element according to an embodiment of the invention.
Fig. 6a is a perspective view of the primary second die element according to an embodiment of the invention;
Fig. 6b is a perspective view of the secondary second die element according to an embodiment of the invention;
Fig. 6c is a partial perspective view of the assembled first and secondary second die elements according to an embodiment of the invention;
Fig. 7a shows a top view of the primary second die element according to an embodiment of the invention;
Fig. 7b show a top view of the fourth die element according to an embodiment of the invention;
Fig. 7c shows a top view of the third die element according to an embodiment of the invention;
Fig. 8a and 8b show the die elements of figs. 5a-6c aligned in a mounting sequence according to one embodiment of the invention; and
Fig. 8c shows die elements of Figs. 6a-7c assembled for extrusion moulding.

### Description of Embodiments

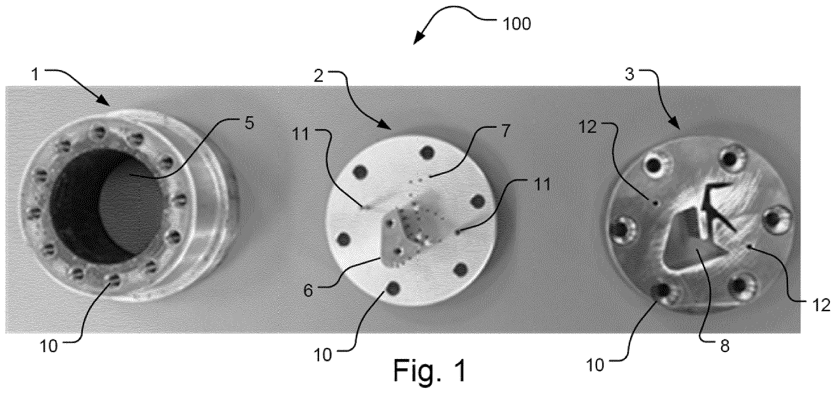

Referring initially to Fig. 1, which shows a general configuration of a first embodiment of an unassembled stack die 100 comprising a first die element in the form of a mounting plate 1, a second die element in the form of an adapter plate 2, and a third die element in the form of a die land plate 3. The mounting plate 1 has a through hole 5 which provides a flow channel in the mounting plate 1.

The mounting plate has, in addition, an inlet orifice for connection to the extruder, and could be of, e.g. an industry standard size or diameter (for example between around 12 mm to 25 mm). The mounting plate also has an outlet opening, which is connected to the second die plate, the adapter plate 2, in the assembled condition. The opening of the mounting plate is wide open, i.e. having a through hole which is in practice only limited in size by the necessary thickness of the plate walls. Thus, in the present embodiment, the flow channel 5 is formed as a chamber inside mounting plate 1.

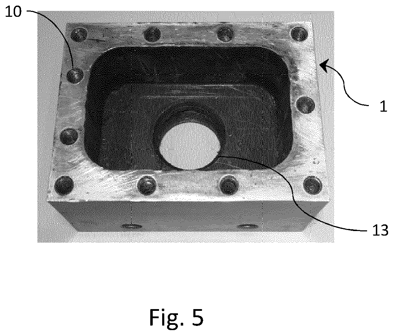

In the embodiment shown, the mounting plate 1 and the through hole constituting the flow channel 5 have circular shapes, but in theory they could have any shape, such as square, polygon etc. Thus, the mounting plate 1 could be cylinder or box shaped (see Figs. 1 and 5). These configurations of the mounting plate make it possible for the extrudate to fill the through hole and flow channel and thereby allowing a more evenly distributed flow pressure of the extrudate on perforations 7 in the adapter plate 2 being achieved.

Further, mounting plate 1 has a number of through holes 10, for assembling the mounting plate 1 with the adapter plate 2 and the die land plate 3. The adapter plate 2 and die land plate 3 have through holes 10 of similar size. The through holes 10 are made such that at least a plurality of them can be aligned and mounted onto an extruder using fastening means such as bolts and nuts. The adapter plate 2 has a protruding element 6, a number of perforations 7 and two guiding pins 11. The die land plate 3 has a cut-out 8, which is substantially in the shape of the desired article to be extrusion moulded. The die land plate 3 further has two guiding holes 12, which have a diameter, these allowing the guiding pins 11 to engage the guiding holes 12. When the guiding pins 11 and guiding holes 12 are engaged, the adapter plate 2 and die land plate 3 are aligned as intended and the protruding element 6 protrudes through the cut-out 8.

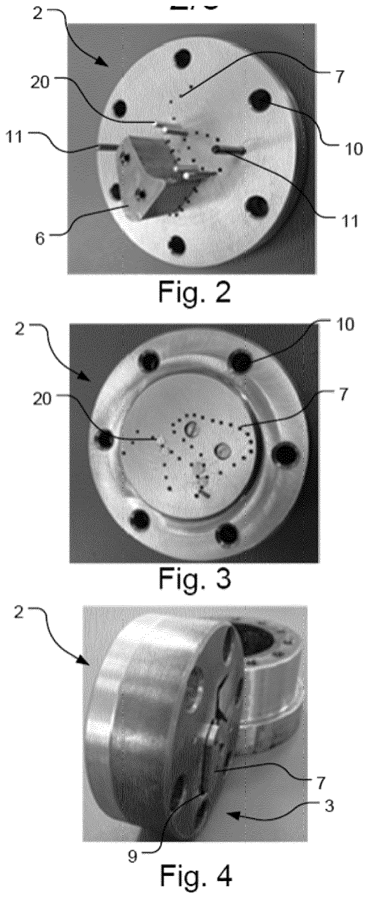

Turning now to Fig. 4 which shows the adapter plate 2 aligned and assembled with the die land plate 3. The protruding element 6 and the cut-out 8 form a crevice 9 around the protruding element 6. The formation of this crevice 9 allows the stack die 100 to produce an article with very thin and well defined wall thickness. The protruding element 6 extends through the die land plate 3 and acts as support on the downstream side of the stack die 100 for parts of the article with a thin wall thickness until these parts have cooled and hardened to maintain their shape.

In the following, reference is now made to Fig. 2 and Fig. 3 which in more detail show the adapter plate 2.

A number of perforations 7 are arranged in a pattern similar to the desired shape of the article. In the current embodiment the perforations are of similar diameter. The perforations may have different size and diameter to increase or limit flow of extrudate in some areas. The adapter plate 2 further comprises a number of pins 20 which have been placed in areas with an excessive flow of extrudate, i.e. too many perforations 7.

As shown in Fig. 3 the pins 20 have been shortened and flattened after insertion, in order not to alter the flow of extrudate. Inserting pins or perforating additional areas is an iterative process which can be continued until the flow of extrudate has been sufficiently adjusted. The protruding element 6 has two through holes 21 for attaching the protrusion 6 to the adapter plate 2. In the current embodiment the through holes 21 have an internal thread and fastening means in the form of a screw 22, is applied to the protruding element 6 from the adapter plate side. The protruding element 6 may be attached by a single through hole 21 and screw (not shown) or additional through holes 21 and corresponding screws. By using removable fastening means instead of e.g. welding, it is ensured that the protruding element 6 can be dismantled easily and have its shape refined or changed, or a different protrusion may be attached.

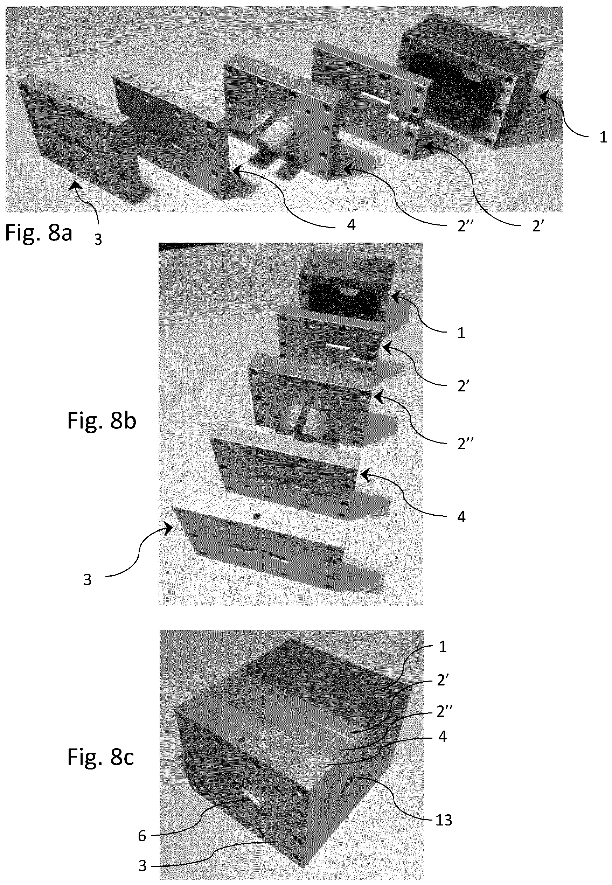

Referring now to Figs 5 to 8c, a second embodiment of a stack die 100 comprises the elements according to the embodiment described herein above, but wherein the second die element 2 is in the form of two adapter plates 2', 2", and in addition a fourth die element in the form of a die sieve plate 4. A first die element in the form of a mounting plate 1 is also comprised in this embodiment, and is analogous to mounting plate 1 in Fig.1.

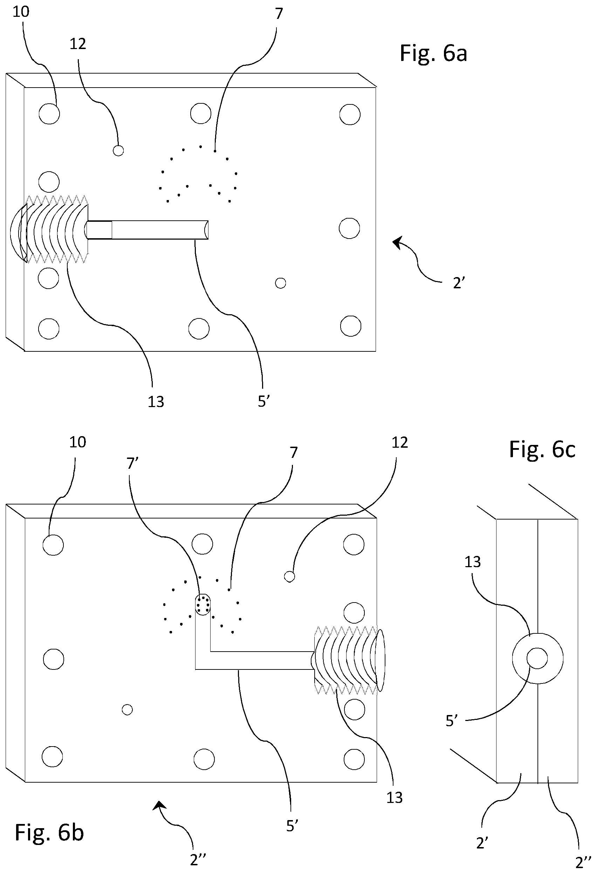

Figs. 6a and 6b show adapter plates 2', 2" in closer detail: Adapter plates 2', 2" each have depressions in matching sides, which, when juxtaposed in the assembled condition, provide a flow channel 5' between adapter plates 2', 2" (Fig. 6c). They also provide extruder coupling means 13, which in the embodiment shown is provided in the form of a thread along a first internal section of the flow channel. Thus, in the assembled condition, flow channel 5' fluidly connects a second extruder (not shown) to the second set of perforations 7'. The flow channel 5' has a circular cross-section, but it could have any shape, such as rectangle, polygon etc. The first and the second flow channels are separated and fluidly connect each of the two extruders with a respective set of perforations in the second die element.

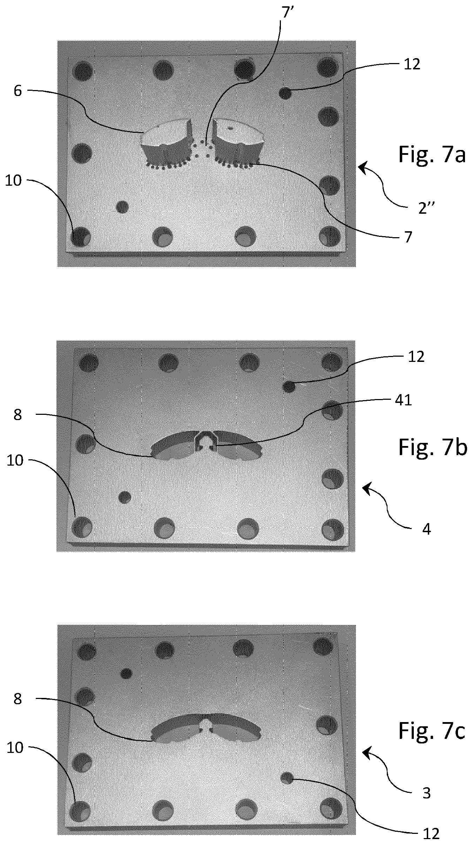

The mounting plate 1 has a number of through holes 10, for assembling the mounting plate 1 with the adapter plates 2', 2", the die land plate 3 and the sieve plate 4. The adapter plates 2', 2", the die land plate 3 and the sieve plate 4 have through holes 10 of similar size. The through holes 10 are made such that at least two through holes in different plates can be aligned and mounted onto an extruder using fastening means such as bolts and nuts. In the embodiment shown in Fig. 7a, the adapter plate 2" has a protruding element 6, a number through holes 10 and 12 and two sets of perforations 7, 7'.

In Fig. 7c, the die land plate 3 has a cut-out 8, which has substantially the shape of the desired article to be extrusion moulded. The die land plate 3 further has two guiding holes 12 which have a diameter that allows the guiding pins 11 to engage the guiding holes 12. When guiding pins 11 and guiding holes 12 are engaged, adapter plate 2 and die land plate 3 are aligned as intended and protruding element 6 protrudes through cut-out 8.

As shown in Fig. 7b, fourth die element 4 has the form of a sieve plate, insofar as the corresponding cut-out in sieve plate 4 is interrupted by separating walls 41. When extrusion moulding, the second set of perforations 7' fluidly connect the downstream side of adapter plate 2" with the upstream side of land plate 3. The separating walls 41 restrict the extrudate exiting die element 2" from spreading laterally with respect to the direction of extrusion once in sieve plate 4, and force it to travel in a downstream direction, towards land plate 3.

Turning now to Figs. 8a-8c, first die element (mounting plate 1), primary second die element (adapter plate 2'), secondary second die element (adapter plate 2"), fourth die element (sieve plate 4) and third die element (land plate 3) are shown in various alignments in the intended sequence. Figs. 8a and 8b show these elements in a disassembled condition and Fig. 8c shows the five elements in an assembled condition, and wherein protruding element 6 protrudes through cut-out 8 of land plate 3.

### List of reference numerals

- 1: first die element/mounting plate
- 2: second die element/adapter plate
- 2': primary second die element
- 2": secondary second die element
- 3: third die element/die land plate
- 4: fourth die element/sieve
- 5: through hole/flow channel
- 5': second flow channel
- 6: protruding element
- 7: perforations
- 7': second set of perforations
- 8: cut-out
- 9: crevice
- 10: through hole
- 11: guiding pins
- 12: guiding holes
- 13: extruder coupling means
- 20: pins
- 21: through holes (in protruding element)
- 41: separating wall
- 100: stack die

## Claims

1. A stack die (100) for extrusion moulding an article of a desired shape, comprising
a first die element (1) configured to be mounted on an extruder, a second die element (2) configured to be mounted on the first die element and third die element (3) configured to be mounted on the second die element,
the first die element (1) comprising a flow channel (5),
the second die element (2) comprising a plurality of perforations (7) fluidly connecting the first die element (1) and third die element (3), and
the third die element (3) comprising a cut-out (8), which has a shape similar to the desired shape of the article and so that it produces an article with the desired shape during an extrusion moulding process
**characterised in** further comprising a protruding element (6) located on a downstream side of the second die element (2) and protruding into the cut-out (8) of the third die element (3) in an assembled condition.

2. A stack die according to claim 1, wherein the perforations (7) in the second die element (2) are arranged in a pattern which is similar to the desired shape of the extruded article.

3. A stack die according to any one of the preceding claims, wherein the protruding element (6) extends through the third die element (3) cut-out (8), part of the protruding element forming a stabilizing shelf beyond the downstream side of the third die element.

4. A stack die according to any one of the preceding claims, wherein the protruding element (6) extends 0.1 to 10 mm beyond the downstream side of third element (3), preferably 0.5 to 5 mm, more preferably 1 to 3 mm, most preferably 2 mm.

5. A stack die according to any one of the preceding claims, wherein the second die element is configured to be mounted on a second extruder and comprises a second flow channel (5') fluidly connecting the second extruder and a second set of perforations (7') in the downstream side of the second die element (2) when extrusion moulding.

6. A stack die according to claim 5, wherein the second die element (2) comprises two die elements,
a primary second die element (2') comprising at least part of the flow channel (5')
and a secondary second die element (2"), comprising the second set of perforations (7') fluidly connecting the flow channel (5') with the downstream side of the secondary second die element (2") when extrusion moulding.

7. A stack die according to any one of claims 5 or 6, wherein a fourth die element (4) is mounted on the second die element (2, 2', 2"), said fourth die element (4) comprising separating walls (41) in the cut-out preventing the two extrudates from mixing while extrusion moulding.

8. A method of manufacturing a stack die (100) according to any one of claims 1 to 7, said method comprising:
a) providing a first, a second and a third die element (1, 2, 2', 2", 3) and optionally, a fourth die element (4),
b) providing the third element (3) with a through-going cut-out (8) configured to produce an extruded element with the desired shape,
c) providing the second element (2, 2', 2") with a plurality of perforations (7, 7'), preferably in a pattern similar to the desired shape, and further providing said element with a protruding element (6), located on a downstream side of the second die element (2, 2") and protruding into the cut-out of the third die element (3) in an assembled condition,
d) providing the first die element (1) with a flow channel (5),
e) testing the stack die to provide an extruded article, and,
if the article obtained in step e) does not match the desired shape,
f) modifying the existing third die element (3), or providing a new third die element and/or providing additional perforations and/or closing perforations in the second die element whereby the flow of extrudate is altered, and
g) repeating step e) and f) until the extruded article obtains the desired shape.

9. Use of the stack die (100) according to any one of claims 1 to 7 for extrusion moulding an article having a desired shape, comprising the steps of:
a) providing an extruder with the stack die, said stack die comprising the first, second and third (1, 2, 3) and optionally fourth (4) die elements,
b) providing a protruding element (6) to the downstream side of the second die element (2, 2"), said protruding element having a height which is longer than the thickness of the third die element (3), or of the combined third element (3) and fourth element (4),
c) forming an extrudate in an extruder,
e) passing the extrudate from the extruder into the flow channel (5, 5') of the first die element (1) and/or the second die element (2', 2") whereby the flow channel is filled and a fluid column is obtained,
f) passing the extrudate into perforations in the second die element (2, 2', 2"), which are in fluid contact with the third die element (3), , and
g) passing the extrudate through the perforations into a through-going cut-out in the third die element (3), or the fourth die element (4) to produce an extruded article having the desired shape.

10. Use of the stack die according to claim 9, further comprising the steps of:
h) stabilizing the extruded article after passing the third die element by use of the protruding element.

## Patentansprüche

1. Stapelmatrize (100) zum Extrudieren eines Artikels einer gewünschten Form, umfassend
ein erstes Matrizenelement (1), das dazu konfiguriert ist, an einem Extruder montiert zu werden, ein zweites Matrizenelement (2), das dazu konfiguriert ist, an dem ersten Matrizenelement montiert zu werden, und ein drittes Matrizenelement (3), das dazu konfiguriert ist, an dem zweiten Matrizenelement montiert zu werden,
wobei das erste Matrizenelement (1) einen Fließkanal (5) umfasst,
wobei das zweite Matrizenelement (2) eine Vielzahl von Perforationen (7) umfasst, die das erste Matrizenelement (1) und das dritte Matrizenelement (3) fluidisch verbinden, und
wobei das dritte Matrizenelement (3) einen Ausschnitt (8) umfasst, der eine Form aufweist, die der gewünschten Form des Artikels ähnlich ist, sodass er während eines Extrudierprozesses einen Artikel mit der gewünschten Form produziert,
**dadurch gekennzeichnet, dass** sie ferner ein vorstehendes Element (6) umfasst, das sich auf einer stromabwärts gelegenen Seite des zweiten Matrizenelements (2) befindet und in einem zusammengebauten Zustand in den Ausschnitt (8) des dritten Matrizenelements (3) vorsteht.

2. Stapelmatrize gemäß Anspruch 1, wobei die Perforationen (7) im zweiten Matrizenelement (2) in einem Muster angeordnet sind, das der gewünschten Form des extrudierten Artikels ähnlich ist.

3. Stapelmatrize gemäß einem der vorhergehenden Ansprüche, wobei sich das vorstehende Element (6) durch den Ausschnitt (8) des dritten Matrizenelements (3) erstreckt, wobei ein Teil des vorstehenden Elements einen Stabilisierungsvorsprung über die stromabwärtige Seite des dritten Matrizenelements hinaus bildet.

4. Stapelmatrize gemäß einem der vorhergehenden Ansprüche, wobei sich das vorstehende Element (6) 0,1 bis 10 mm über die stromabwärtige Seite des dritten Elements (3) hinaus erstreckt, vorzugsweise 0,5 bis 5 mm, noch bevorzugter 1 bis 3 mm, am meisten bevorzugt 2 mm.

5. Stapelmatrize gemäß einem der vorhergehenden Ansprüche, wobei das zweite Matrizenelement dazu konfiguriert ist, auf einem zweiten Extruder montiert zu werden, und einen zweiten Fließkanal (5') umfasst, der den zweiten Extruder und einen zweiten Satz von Perforationen (7') in der stromabwärts gelegenen Seite des zweiten Matrizenelements (2) beim Extrudieren fluidisch verbindet.

6. Stapelmatrize gemäß Anspruch 5, wobei das zweite Matrizenelement (2) zwei Matrizenelemente umfasst,
ein primäres zweites Matrizenelement (2'), das mindestens einen Teil des Fließkanals (5') umfasst,
und ein sekundäres zweites Matrizenelement (2"), das den zweiten Satz von Perforationen (7') umfasst, die den Fließkanal (5') beim Extrudieren fluidisch mit der stromabwärts gelegenen Seite des sekundären zweiten Matrizenelements (2") verbinden.

7. Stapelmatrize gemäß einem der Ansprüche 5 oder 6, wobei ein viertes Matrizenelement (4) auf dem zweiten Matrizenelement (2, 2', 2") montiert ist, wobei das vierte Matrizenelement (4) Trennwände (41) in dem Ausschnitt umfasst, die verhindern, dass sich die zwei Extrudate während des Extrudierens vermischen.

8. Verfahren zur Herstellung einer Stapelmatrize (100) gemäß einem der Ansprüche 1 bis 7, das Verfahren umfassend:
a) Bereitstellen eines ersten, eines zweiten und eines dritten Matrizenelements (1, 2, 2', 2", 3) und optional eines vierten Matrizenelements (4),
b) Bereitstellen des dritten Elements (3) mit einem durchgehenden Ausschnitt (8), der dazu konfiguriert ist, ein extrudiertes Element mit der gewünschten Form zu produzieren,
c) Bereitstellen des zweiten Elements (2, 2', 2") mit einer Vielzahl von Perforationen (7, 7'), vorzugsweise in einem Muster, das der gewünschten Form ähnlich ist, und ferner Bereitstellen des Elements mit einem vorstehenden Element (6), das sich auf einer stromabwärts gelegenen Seite des zweiten Matrizenelements (2, 2") befindet und in einem zusammengebauten Zustand in den Ausschnitt des dritten Matrizenelements (3) vorsteht,
d) Bereitstellen des ersten Matrizenelements (1) mit einem Fließkanal (5),
e) Testen der Stapelmatrize, um einen extrudierten Artikel bereitzustellen, und,
wenn der in Schritt e) erhaltene Artikel nicht der gewünschten Form entspricht,
f) Abwandeln des vorhandenen dritten Matrizenelements (3) oder Bereitstellen eines neuen dritten Matrizenelements und/oder Bereitstellen zusätzlicher Perforationen und/oder Schließen von Perforationen in dem zweiten Matrizenelement, wodurch der Extrudatfluss verändert wird, und
g) Wiederholen von Schritt e) und f), bis der extrudierte Artikel die gewünschte Form erhält.

9. Verwendung der Stapelmatrize (100) gemäß einem der Ansprüche 1 bis 7 zum Extrudieren eines Artikels mit einer gewünschten Form, umfassend die Schritte:
a) Bereitstellen eines Extruders mit der Stapelmatrize, wobei die Stapelmatrize das erste, zweite und dritte (1, 2, 3) und optional vierte (4) Matrizenelement umfasst,
b) Bereitstellen eines vorstehenden Elements (6) an der stromabwärts gelegenen Seite des zweiten Matrizenelements (2, 2"), wobei das vorstehende Element eine Höhe aufweist, die länger ist als die Dicke des dritten Matrizenelements (3) oder des kombinierten dritten Elements (3) und vierten Elements (4),
c) Bilden eines Extrudats in einem Extruder,
e) Weiterleiten des Extrudats aus dem Extruder in den Fließkanal (5, 5') des ersten Matrizenelements (1) und/oder des zweiten Matrizenelements (2', 2"), wodurch der Fließkanal gefüllt wird und eine Fluidsäule erhalten wird,
f) Weiterleiten des Extrudats in Perforationen im zweiten Matrizenelement (2, 2', 2"), die in Fluidkontakt mit dem dritten Matrizenelement (3) stehen, und
g) Weiterleiten des Extrudats durch die Perforationen in einen durchgehenden Ausschnitt im dritten Matrizenelement (3) oder im vierten Matrizenelement (4), um einen extrudierten Artikel mit der gewünschten Form zu produzieren.

10. Verwendung der Stapelmatrize gemäß Anspruch 9, ferner umfassend die Schritte:
h) Stabilisieren des extrudierten Artikels nach dem Passieren des dritten Matrizenelements durch Verwenden des vorstehenden Elements.

## Revendications

1. Matrice empilée (100) pour le moulage par extrusion d'un article d'une forme souhaitée, comprenant
un premier élément de matrice (1) configuré pour être monté sur une extrudeuse, un deuxième élément de matrice (2) configuré pour être monté sur le premier élément de matrice et un troisième élément de matrice (3) configuré pour être monté sur le deuxième élément de matrice,
le premier élément de matrice (1) comprenant un canal d'écoulement (5),
le deuxième élément de matrice (2) comprenant une pluralité de perforations (7) raccordant de façon fluidique le premier élément de matrice (1) et le troisième élément de matrice (3), et
le troisième élément de matrice (3) comprenant une découpe (8), laquelle a une forme similaire à la forme souhaitée de l'article et de sorte qu'elle produise un article ayant la forme souhaitée pendant un processus de moulage par extrusion
**caractérisée en ce qu'**elle comprend en outre un élément en saillie (6) situé sur un côté aval du deuxième élément de matrice (2) et faisant saillie jusque dans la découpe (8) du troisième élément de matrice (3) dans un état assemblé.

2. Matrice empilée selon la revendication 1, dans laquelle les perforations (7) dans le deuxième élément de matrice (2) sont agencées selon un motif qui est similaire à la forme souhaitée de l'article extrudé.

3. Matrice empilée selon l'une quelconque des revendications précédentes, dans laquelle l'élément en saillie (6) s'étend à travers le troisième élément de matrice (3) découpé (8), une partie de l'élément en saillie formant une étagère de stabilisation au-delà du côté aval du troisième élément de matrice.

4. Matrice empilée selon l'une quelconque des revendications précédentes, dans laquelle l'élément en saillie (6) s'étend de 0,1 à 10 mm au-delà du côté aval du troisième élément (3), préférablement de 0,5 à 5 mm, plus préférablement de 1 à 3 mm, le plus préférablement de 2 mm.

5. Matrice empilée selon l'une quelconque des revendications précédentes, dans laquelle le deuxième élément de matrice est configuré pour être monté sur une deuxième extrudeuse et comprend un deuxième canal d'écoulement (5') raccordant de façon fluidique la deuxième extrudeuse et un deuxième ensemble de perforations (7') dans le côté aval du deuxième élément de matrice (2) lors du moulage par extrusion.

6. Matrice empilée selon la revendication 5, dans laquelle le deuxième élément de matrice (2) comprend deux éléments de matrice,
un deuxième élément de matrice primaire (2') comprenant au moins une partie du canal d'écoulement (5')
et un deuxième élément de matrice secondaire (2"), comprenant le deuxième ensemble de perforations (7') raccordant de façon fluidique le canal d'écoulement (5') au côté aval du deuxième élément de matrice secondaire (2'') lors du moulage par extrusion.

7. Matrice empilée selon l'une quelconque des revendications 5 ou 6, dans laquelle un quatrième élément de matrice (4) est monté sur le deuxième élément de matrice (2, 2', 2''), ledit quatrième élément de matrice (4) comprenant des parois de séparation (41) dans la découpe empêchant les deux extrudats de se mélanger pendant le moulage par extrusion.

8. Procédé de fabrication d'une matrice empilée (100) selon l'une quelconque des revendications 1 à 7, ledit procédé comprenant :
a) la fourniture d'un premier, d'un deuxième et d'un troisième élément de matrice (1, 2, 2', 2", 3) et facultativement, d'un quatrième élément de matrice (4),
b) le fait de pourvoir le troisième élément (3) d'une découpe traversante (8) configurée pour produire un élément extrudé ayant la forme souhaitée,
c) le fait de pourvoir le deuxième élément (2, 2', 2'') d'une pluralité de perforations (7, 7'), préférablement selon un motif similaire à la forme souhaitée, et le fait de pourvoir en outre ledit élément d'un élément en saillie (6), situé sur un côté aval du deuxième élément de matrice (2, 2'') et faisant saillie jusque dans la découpe du troisième élément de matrice (3) dans un état assemblé,
d) le fait de pourvoir le premier élément de matrice (1) d'un canal d'écoulement (5),
e) le fait de tester la matrice empilée pour fournir un article extrudé, et,
si l'article obtenu à l'étape e) ne correspond pas à la forme souhaitée,
f) la modification du troisième élément de matrice existant (3), ou la fourniture d'un nouveau troisième élément de matrice et/ou la fourniture de perforations supplémentaires et/ou la fermeture des perforations dans le deuxième élément de matrice, ce par quoi l'écoulement d'extrudat est changé, et
g) la répétition de l'étape e) et de l'étape f) jusqu'à ce que l'article extrudé obtienne la forme souhaitée.

9. Utilisation de la matrice empilée (100) selon l'une quelconque des revendications 1 à 7 pour le moulage par extrusion d'un article ayant une forme souhaitée, comprenant les étapes consistant à :
a) pourvoir l'extrudeuse de la matrice empilée, ladite matrice empilée comprenant les premier, deuxième et troisième (1, 2, 3) et facultativement quatrième (4) éléments de matrice,
b) fournir un élément en saillie (6) au côté aval du deuxième élément de matrice (2, 2''), ledit élément en saillie ayant une hauteur qui est plus longue que l'épaisseur du troisième élément de matrice (3), ou du troisième élément (3) et du quatrième élément (4) combinés,
c) former un extrudat dans une extrudeuse,
e) faire passer l'extrudat de l'extrudeuse dans le canal d'écoulement (5, 5') du premier élément de matrice (1) et/ou du deuxième élément de matrice (2', 2''), ce par quoi le canal d'écoulement est rempli et une colonne de fluide est obtenue,
f) faire passer l'extrudat dans des perforations dans le deuxième élément de matrice (2, 2', 2''), qui sont en contact fluidique avec le troisième élément de matrice (3), et
g) le fait de faire passer l'extrudat à travers les perforations dans une découpe traversante dans le troisième élément de matrice (3), ou le quatrième élément de matrice (4), pour produire un article extrudé ayant la forme souhaitée.

10. Utilisation de la matrice empilée selon la revendication 9, comprenant en outre les étapes consistant à :
h) stabiliser l'article extrudé après le passage du troisième élément de matrice à l'aide de l'élément en saillie.
